# EUROPÄISCHE PATENTSCHRIFT

(11) **EP 3 030 475 B1**
(45) Veröffentlichungstag und Bekanntmachung des Hinweises auf die Patenterteilung: **06.09.2017**
(21) Anmeldenummer: 14743996.2
(22) Anmeldetag: 25.07.2014
(51) Int. Cl.: B62D 21/11

(54) **HILFSRAHMEN FÜR EIN KRAFTFAHRZEUG**
SUBFRAME FOR A MOTOR VEHICLE
CHÂSSIS AUXILIAIRE POUR VÉHICULE AUTOMOBILE

(30) Priorität: 09.08.2013 DE 102013013325
(43) Veröffentlichungstag der Anmeldung: 15.06.2016
(73) Patentinhaber: Audi AG, 85045 Ingolstadt (DE)
(72) Erfinder: KRAMER, Tobias, 85134 Stammham (DE); BOSCH, Jakob, 88326 Aulendorf (DE)
(74) Vertreter: Reichert, Thomas Klaus
(86) Internationale Anmeldenummer: PCT/EP2014/002039
(87) Internationale Veröffentlichungsnummer: WO 2015/018501

(56) Entgegenhaltungen:
- EP-A1- 0 530 594
- EP-A1- 1 686 042
- EP-A2- 1 577 195
- EP-A2- 2 093 131
- FR-A1- 2 947 512

## Beschreibung

Die vorliegende Erfindung betrifft einen Hilfsrahmen für ein Kraftfahrzeug gemäß dem Oberbegriff des Patentanspruchs 1.

Aus der DE 102 29 161 B4 ist ein solcher Hilfsrahmen für ein Kraftfahrzeug bekannt. An dem vorderen Hilfsrahmen-Querträger des Hilfsrahmens ist das Gehäuse einer Zahnstangenlenkung angeschraubt. Hierzu sind an dem als Hochkantprofil ausgebildeten Hilfsrahmen-Querträger halbschalenförmige Lageraufnahmen vorgesehen, an denen das im Querschnitt etwa kreissymmetrische Lenkgehäuse befestigt ist. Der Hilfsrahmen-Querträger ist durch seine rechteckförmige, in Hochrichtung ausgerichtete Querschnittsform entsprechend biegesteif, was für die üblicherweise am Hilfsträger angelenkten Radführungselemente von Radaufhängungen und gegebenenfalls für die Aufhängung eines Antriebsaggregats von Vorteil ist.

Aus der DE 10 2004 058 380 A1 und FR2947512 ist ein gattungsgemäßer Hilfsrahmen bekannt, der daran angelenkte Radführungselemente aufweist. In der Fahrzeuglängsrichtung betrachtet sind beiderseits des vorderen Hilfsrahmen-Querträgers Funktionsteile der Radaufhängungen vorgesehen. Die Funktionsteile sind einerseits das Gehäuse einer Zahnstangenlenkung, das in der Fahrtrichtung hinter dem Hilfsrahmen-Querträger angeordnet ist, und andererseits ein in der Draufsicht betrachtet U-förmigen Drehstabilisator, der in der Fahrtrichtung vor dem Hilfsrahmen-Querträger angeordnet ist.

Bei einem aktiven Fahrwerkssystem kann anstelle eines solchen U-förmigen Drehstabilisators ein bauraumintensiver Drehaktuator zum Einsatz kommen, der über Drehfederstäbe auf die Fahrzeug-Radaufhängung einwirkt. Mit dem Drehaktuator kann je nach Ansteuerung das Fahrzeugniveau und/oder Nick- und Wankbewegungen des Kraftfahrzeuges des Fahrzeuges ausgeglichen werden. Für den Drehaktuator ist ein zusätzlicher Bauraum in der Fahrzeugfront bereitzustellen, der jedoch aufgrund des hohen Bauraumbedarfs für die Antriebsaggregate nur stark eingeschränkt vorhanden.

Zur Bereitstellung eines zusätzlichen Bauraums könnte der Hilfsrahmen-Querträger nicht als ein Hochkantprofil, sondern als ein Flachprofil im Wesentlichen liegend im Hilfsrahmen verbaut werden. Eine solche Flachprofil-Anordnung wirkt sich jedoch nachteilig auf die Steifigkeit des Hilfsrahmens aus.

Die Aufgabe der Erfindung besteht darin, einen Hilfsrahmen für ein Kraftfahrzeug bereitzustellen, der bei Aufrechterhaltung einer hohen Biegesteifigkeit des Hilfsrahmen-Querträgers und einer einfachen, gewichtsgünstigen Konstruktion eine räumlich günstige Anordnung zumindest eines benachbarten Funktionsteils der Radaufhängungen ermöglicht.

Die Aufgabe ist mit den Merkmalen des Patentanspruchs 1 gelöst. Vorteilhafte Weiterbildungen und Ausgestaltungen der Erfindung sind in den Unteransprüchen angeführt.

Gemäß dem kennzeichnenden Teil des Patentanspruches 1 weist der Hilfsrahmen-Querträger einen Durchbruch auf, der einen zusätzlichen Bauraum bereitstellt, in dem das Funktionsteil zumindest teilweise einragt. Durch die vorgeschlagene Maßnahme bleibt trotz einer Gewichtsverminderung (aufgrund des Durchbruches) die Biegesteifigkeit des Hilfsrahmen-Querträgers weitgehend erhalten und es kann ein benachbartes Funktionsteil räumlich näher zum Hilfsrahmen-Querträger angeordnet sein, was bei der räumlichen Beengtheit von an Hilfsrahmen angelenkter und angeordneter Bauteile im Kraftfahrzeug (Radführungselemente, Aggregatelager, Lenkungssysteme, Aktuatoren, etc.) einen wesentlichen Vorteil darstellt.

Im Hinblick auf eine einwandfreie Steifigkeit des Hilfsrahmens ist es von Vorteil, wenn der Hilfsrahmen-Querträger ein Hochkantprofil mit zumindest einer Querträgerwand ist. In der Querträgerwand ist der Durchbruch angeordnet. Zur weiteren Verbesserung der Quersteifigkeit des Hilfsrahmens kann der Hilfsrahmen-Querträger den Durchbruch geschlossen rahmenförmig begrenzen, und zwar mit in der Fahrzeughochrichtung oberen und unteren Wandrahmenteilen sowie in der Fahrzeugquerrichtung seitlichen Wandrahmenteilen. Sämtliche Wandrahmenteile können bevorzugt materialeinheitlich und/oder einstückig in der Querträgerwand ausgebildet sein.

Der Hilfsrahmen-Querträger kann bevorzugt einen Hohlraum begrenzen, und zwar mit einer in der Fahrtrichtung vorderen Querträgerwand und einer hinteren Querträgerwand. Das Hohlprofil des Hilfsrahmen-Querträgers kann, in der Fahrzeughochrichtung betrachtet, von einem Obergurt und einem Untergurt begrenzt sein, zwischen denen sich die hochkant angeordneten Querträgerwände erstrecken.

In den beiden Querträgerwänden kann jeweils ein Durchbruch ausgebildet sein. Dies ist insbesondere dann von Vorteil, wenn das Verhältnis von Höhe zu Breite des Hilfsrahmen-Querträgers relativ groß ist bzw. der Hilfsrahmen-Querträger relativ schmal aber mit hoher Biegesteifigkeit in Z-Richtung ausgeführt ist.

Der Außenumfang des Funktionsteils kann im Wesentlichen kreisförmig sein, wobei die Höhe der Durchbrüche zur Konturanpassung an das einragende Funktionsteil entsprechend unterschiedlich bemessen sein können.

Bei einer Ausbildung des Funktionsteils als Drehaktuator können dessen Drehfederstäbe, in der Fahrzeuglängsrichtung betrachtet, beabstandet sowie außerhalb des vom Hilfsrahmen-Querträger bereitgestellten Durchbruchs angeordnet sein. Zur weiteren Aussteifung des Hilfsrahmen-Querträgers kann zumindest eines der Rahmenwandteile des Hilfsrahmen-Querträgers mit einem Neigungswinkel schräg umgelegt sein, insbesondere ein unteres Rahmenwandteil der in der Fahrtrichtung näher an dem Funktionsteil angeordneten Querträgerwand. Das schräg umgelegte Rahmenwandteil kann außerdem mit der benachbarten Querträgerwand eine Fachwerkstruktur mit einem geschlossenen Hohlprofil bilden und insbesondere mit dieser verschweißt sein. Dadurch ist bei geringem baulichen Mehraufwand die Biegesteifigkeit des Hilfsrahmen-Querträgers zusätzlich erhöht.

Die Durchbrüche sind in den Querträgerwänden ohne Unterbrechung des Obergurts und des Untergurtes vorgesehen, wobei das zumindest eine Funktionsteil in der senkrechten Projektion gesehen in den Hilfsrahmen-Querträger einragen kann. Dabei kann der Außenumfang des Funktionsteils im Wesentlichen kreissymmetrisch sein, wobei die Höhe der sich in der Querrichtung erstreckenden Ausnehmungen je nach Überdeckung mit dem Außenumfang des Funktionsteils entsprechend unterschiedlich ist.

In einer weiteren Ausgestaltung der Erfindung kann die dem Funktionsteil näher liegende Wand im Bereich der Ausnehmung ausgehend vom Ober- und/oder Untergurt schräg umgelegt sein. Damit kann bei einer engen Anordnung des Funktionsteils zum Hilfsrahmen-Querträger in größerem Maße ein Freigang zwischen dem Funktionsteil und dem Hilfsrahmen-Querträger hergestellt werden.

In einer baulich vorteilhaften, kompakten Konstruktion des Hilfsrahmens kann der Hilfsrahmen-Querträger mit einer quer verlaufenden Traverse kombiniert sein, die zumindest eines der Funktionsteile trägt, wobei besonders bevorzugt die Traverse zugleich den Untergurt des Hilfsrahmen-Querträgers bildet, auf die zumindest eine der aufrecht stehenden Querträgerwände mittels Schweißverbindungen fest aufgesetzt ist.

In einer weiteren, bevorzugten Ausgestaltung der Erfindung können beiderseits des Hilfsrahmen-Querträgers benachbarte, quer verlaufende Funktionsteile vorgesehen sein, wobei zumindest ein Funktionsteil in die Ausnehmungen des Hilfsrahmen-Querträgers einragt.

Dabei kann das eine Funktionsteil das Gehäuse eines Lenksystems (einer Zahnstangenlenkung oder zweier Lenksteller) und das andere Funktionsteil ein auf Drehstabilisatoren wirkender Aktuator sein, wobei bevorzugt zumindest das zwischen den Drehstabilisatoren liegende Gehäuse des Aktuators in den Hilfsrahmen-Querträger entsprechend einragt. Über den Aktuator können bei einer aktiven Radaufhängung zum Beispiel elektromechanisch die geteilt ausgeführten Drehstabilisatoren in ihrer auf Radführungselemente wirkenden Vorspannung variabel verändert werden.

Schließlich kann der im Querschnitt etwa rechteckförmige Hilfsrahmen-Querträger über senkrecht ausgerichtete Lageraugen an nach oben ausgerichtete Gussknoten des Hilfsrahmens angeschlossen sein, an die ferner die Längsträger und Querverbindungsbleche angeschlossen, insbesondere angeschraubt sind, wobei das Lenksystem und die Drehstabilisatoren des Aktuators durch die Gussknoten hindurch geführt sind.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer perspektivischen Darstellung den Zusammenbauzustand eines Hilfsrahmens;
- Fig. 2: einen Teillängsschnitt durch den vorderen Bereich des Hilfsrahmens mit jeweils den strichpunktiert angedeuteten Bauraum für die Funktionsteile, die unmittelbar benachbart beiderseits des Hilfsrahmen-Querträgers positioniert sind;
- Fig. 3: eine raumbildliche Teilansicht in der Schnittebene der Fig. 2, und zwar mit strichpunktiert angedeuteter Konturlinie des dem Hilfsrahmen-Querträger benachbarten Aktuatorgehäuses bei nicht dargestelltem Lenkgetriebe;
- Fig. 4: eine weitere, raumbildliche Teilansicht in der Schnittebene der Fig. 2, und zwar unter Weglassung des Lenkgetriebes und des Aktuatorgehäuses;
- Fig.5: eine vergrößerte Teilansicht der Fig. 2 der unmittelbar dem Hilfsrahmen-Querträger benachbarten Funktionsteile und der Ausbildung des Hilfsrahmen-Querträgers mit schräg umgelegten, ein Hohlprofil bildenden Wandabschnitt am durch eine Traverse gebildeten Untergurt;
- Fig. 6: in einer Ansicht entsprechend der Fig. 1 ein weiteres Ausführungsbeispiel; und
- Fig. 7: in einer Ansicht entsprechend der Fig. 5 ein weiteres Ausführungsbeispiel der Erfindung.

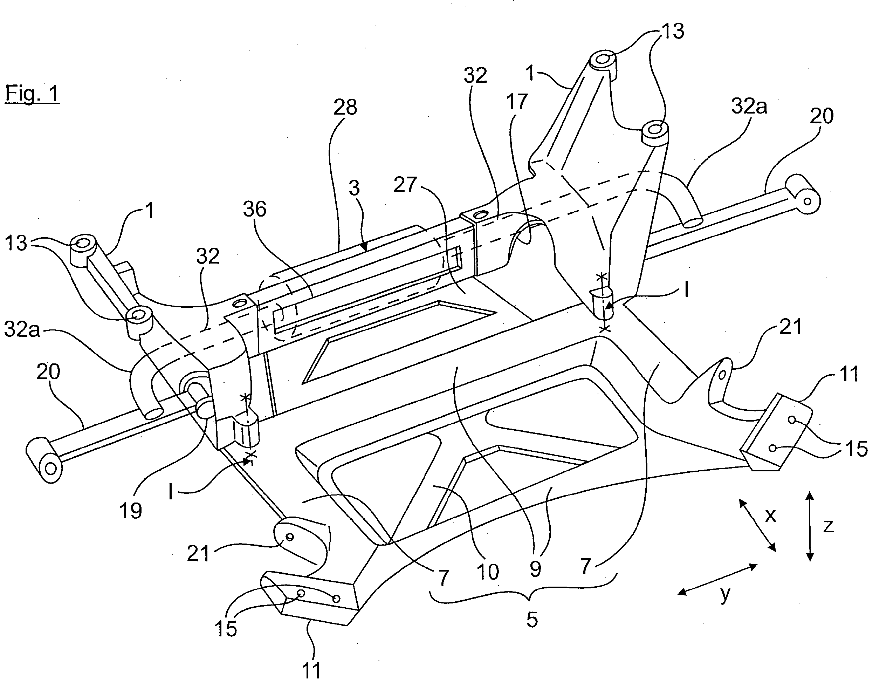

In der Fig. 1 ist ein Hilfsrahmen in Alleinstellung gezeigt. Der Hilfsrahmen weist in der Fahrzeuglängsrichtung x jeweils seitliche vordere Knotenelemente 1 auf, die hier beispielhaft als kastenförmige Aluminium-Gussknoten gebildet sind. Die beiden Knotenelemente 1 sind in der Fahrzeugquerrichtung y mit einem Hilfsrahmen-Querträger 3 verbunden. In der Fahrzeuglängsrichtung x nach hinten schließt sich an den beiden vorderen Gussknoten 1 ein flächiges, plattenförmiges Verstärkungselement 5 an, das in etwa fachwerkartig mit Längsstreben 7, Querstreben 9 sowie diagonal verlaufende Streben 10 ausgeführt ist. Am hinteren Ende des Verstärkungselementes 5 sind materialeinheitlich und einstückig hintere Knotenelemente 11 integral am Verstärkungselement 5 angeformt.

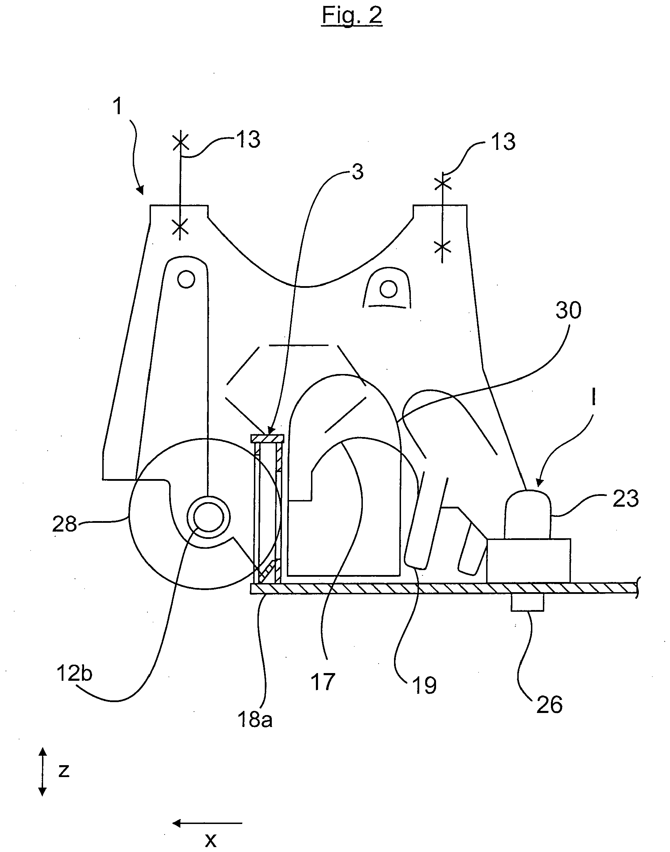

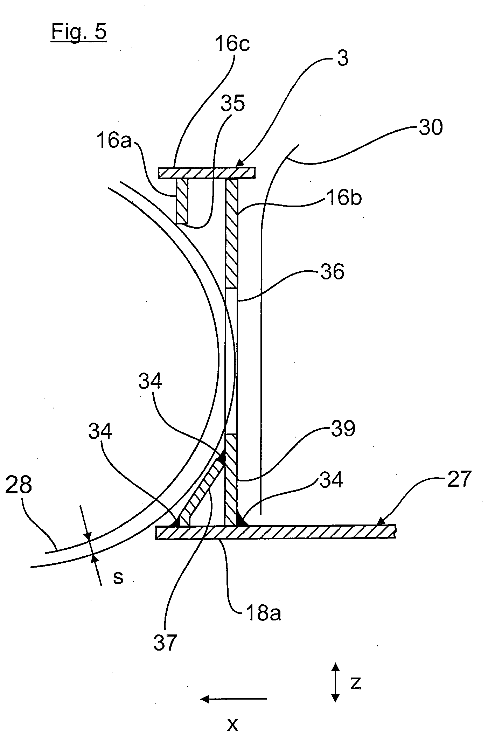

Die beiden vorderen Knotenelemente 1 weisen oberseitig jeweils Schraubstellen 13 zur Anbindung an einem nicht dargestellten Karosserie-Längsträger auf. Demgegenüber weisen die beiden hinteren Knotenelemente 11 jeweils Schraubstellen 15 zur Anbindung am Längsträger am Fuß der A-Säule des Fahrzeugaufbaus auf. Unterhalb der Schraubstellen 13 der beiden vorderen Knotenelemente 1 ist eine Lenkungsgasse 17 sowie eine nur angedeutete Lenkerkonsole 19 vorgesehen, an denen nur teilweise angedeutete Radaufhängungs-Lenker 20 angelenkt sind. Durch die beiden Lenkungsgassen 17 der vorderen Knotenelemente 1 werden Lenkstangen eines nicht dargestellten Lenkgetriebes geführt. Das Lenkgetriebe ist in den Fig. 2 und 5 strichpunktiert angedeutet und mit der Bezugsziffer 30 versehen. Demzufolge ist das Lenkgetriebe 30 in der Fahrtrichtung x hinter dem vorderen Hilfsrahmen-Querträger 3 angeordnet. In den beiden hinteren Knotenelementen 11 sind neben den Schraubstellen 15 ebenfalls Lenkerkonsolen 21 für hintere Radaufhängungs-Lenker vorgesehen.

Gemäß der Fig. 1 ist das vordere Ende des flächigen Verstärkungselements 5 seitlich über erste Anbindungsstellen I mit den beiden vorderen Knotenelementen 1 verbunden. Jede der ersten Anbindungsstellen I ist jeweils mit einem hinteren, am Knotenelement 1 angeformten Gewindebutzen 23 (Fig. 2) ausgeführt, mit dem das Verstärkungselement 5 verschraubt ist. In etwa mittig zwischen diesen beiden Anbindungsstellen I ist das Verstärkungselement 5 mit einer Blechverlängerung 27 in der Fahrtrichtung x nach vorne bis zum vorderen Hilfsrahmen-Querträger 3 verlängert.

Wie oben erwähnt, ist das Zahnstangenlenkgetriebe 30 in der Fahrtrichtung x hinter dem Hilfsrahmen-Querträger 3 angeordnet, während in der Fahrtrichtung x vor dem Hilfsrahmen-Querträger 3 als weiteres Funktionsteil ein elektromechanischer Aktuator 28, bestehend zum Beispiel aus einem Elektromotor und einem Stellgetriebe, angeordnet ist.

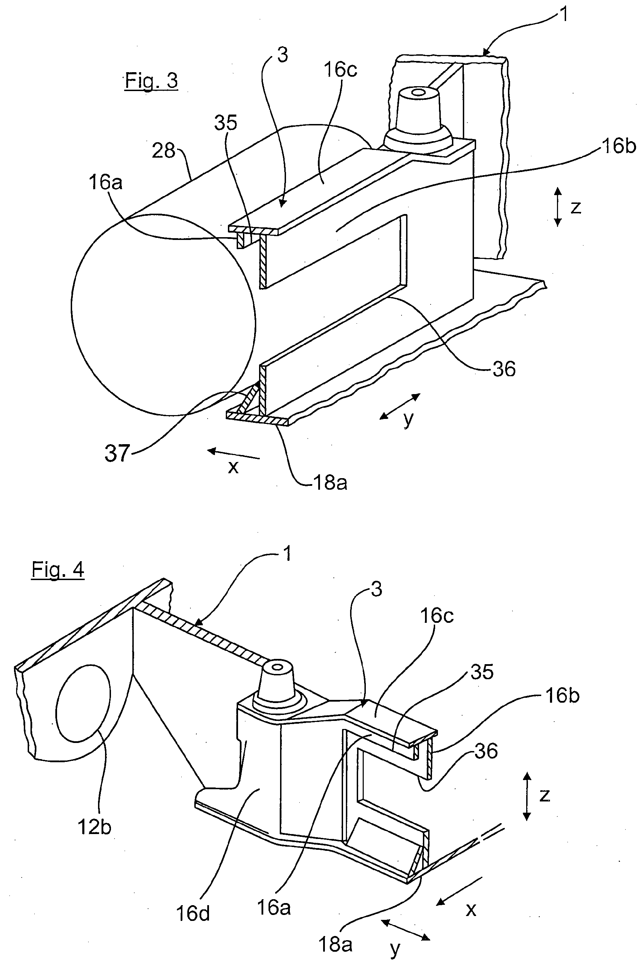

Der im Ausführungsbeispiel vorne liegende Aktuator 28 wirkt auf zwei geteilt ausgeführte Drehstabilisatoren 32, die an ihrem quer verlaufenden Abschnitt jeweils in Lageraufnahmen 12b (Fig. 2 und 4) an den Knotenelementen 1 drehbar geführt sind und über abgewinkelte Arme 32a (Fig. 1) mit den angedeuteten Radführungselementen 20 der Radaufhängungen in Wirkverbindung sind.

Ferner ist das hinter dem Hilfsrahmen-Querträger 3 positionierte Lenkgetriebe 30 über nicht gezeigte Anschraubstellen beiderseits an den Knotenelementen 1 angeschraubt, wobei zum Lenken der Vorderräder des Kraftfahrzeugs die nicht gezeigten Spurstangen des Lenkgetriebes 30 durch die nach unten offene Lenkungsgassen 17 der Knotenelemente 1 nach außen geführt sind und mit Lenkspurhebeln der Radaufhängungen entsprechend gelenkig verbunden sind.

Aus räumlichen und konstruktiven Gründen sind das Lenkgetriebe 30 und der Aktuator 28 (Fig. 2) möglichst nahe zueinander und zum Hilfsrahmen-Querträger 3 am Hilfsrahmen anzuordnen. Der Aktuator 28 sollte aus funktionell bedingten Gründen einen vorgegebenen Freigang s (in der Fig. 5 angedeutet) um dessen kreissymmetrischen Außenumfang aufweisen.

Dazu ist der Hilfsrahmen-Querträger 3 rechteckförmig mit einem eine hohe Biegesteifigkeit in Fahrzeughochrichtung z sicherstellenden Verhältnis von Höhe zu Breite (zum Beispiel 6:1) ausgeführt, also relativ schmal ausgebildet und hochkant angeordnet.

Der Hilfsrahmen-Querträger 3 ist dabei aus zwei aufrecht stehenden Querträgerwänden 16a, 16b (vgl. auch Fig. 3 bis 5) sowie an diese anschließend aus einem Untergurt 18a und einem Obergurt 16c gebildet. Der Untergurt 18a ist an der flächig ausgebildeten Blechverlängerung 27 einteilig angeformt.

Die Querträgerwände 16a, 16b sowie der Untergurt 18a und der Obergurt 16c des Hilfsrahmen-Querträgers 16 gehen seitlich in senkrecht ausgerichtete Befestigungsaugen 16d (Fig. 4) über und sind dort mit den Knotenelementen 1 biegesteif von oben und von unten verschraubt.

Wie insbesondere die Fig. 2 zeigt, ragt der Außenumfang des Aktuators 28 in den Hilfsrahmen-Querträger 3 ein, wozu über die Länge des Aktuators 28 in die Querträgerwände 16a, 16b in ihrer Höhe unterschiedlich ausgeführte, schlitzförmige Durchbrüche 35, 36 eingearbeitet sind. Die Durchbrüche 35, 36 sind durch Wandrahmenteile der vorderen und hinteren Querträgerwände 16a, 16b begrenzt, die eine ausreichende Biegesteifigkeit des Hilfsrahmen-Querträgers 16 sicherstellen und die an den durchgehenden Untergurt 18a bzw. Obergurt 16c anschließen.

Des Weiteren ist das untere Wandrahmenteil 37 (Fig. 5) der vorderen Querträgerwand 16a ausgehend vom Untergurt 18a zum Wandabschnitt 39 (Fig. 5) der hinteren Querträgerwand 16b schräg umgelegt und bildet somit ein umgekehrt V-förmiges Hohlprofil hoher Biegefestigkeit. Mit 34 sind dabei die Schweißnähte bezeichnet, mittels denen die Wandabschnitte der Wände 16a, 16b miteinander und mit dem Untergurt 18a fest verschweißt sind.

Das Abschrägen des unteren Wandrahmenteils 37 der vorderen Querträgerwand 16a vergrößert zudem die Eindringtiefe des Aktuators 28 bzw. den für den Aktuator 28 erforderlichen Freiraum s (Fig. 5).

Die Erfindung ist nicht auf das beschriebene Ausführungsbeispiel beschränkt. Sowohl der Hilfsrahmen als auch dessen Hilfsrahmen-Querträger 3 können unter Berücksichtigung konstruktiver Vorgaben oder Anforderungen abweichend dazu ausgeführt sein. Zum Beispiel könnte der Hilfsrahmen-Querträger 3 auch in einem anderen Verhältnis von Höhe zu Breite konfiguriert sein und es könnten gegebenenfalls beide Funktionsteile 28, 30 in den Hilfsrahmen-Querträger 3 einragen. Ferner könnte der Hilfsrahmen-Querträger 3 auch ohne Verbindung mit der Blechverlängerung 27 als separates Bauteil ausgeführt sein.

Anstelle des Lenkgetriebes 30 als das eine Funktionsteil könnten bei einer Hinterachse für Kraftfahrzeuge auch Lenkungssteller vorgesehen sein, die die Hinterräder des Kraftfahrzeugs definiert lenken (Vierradlenkung).

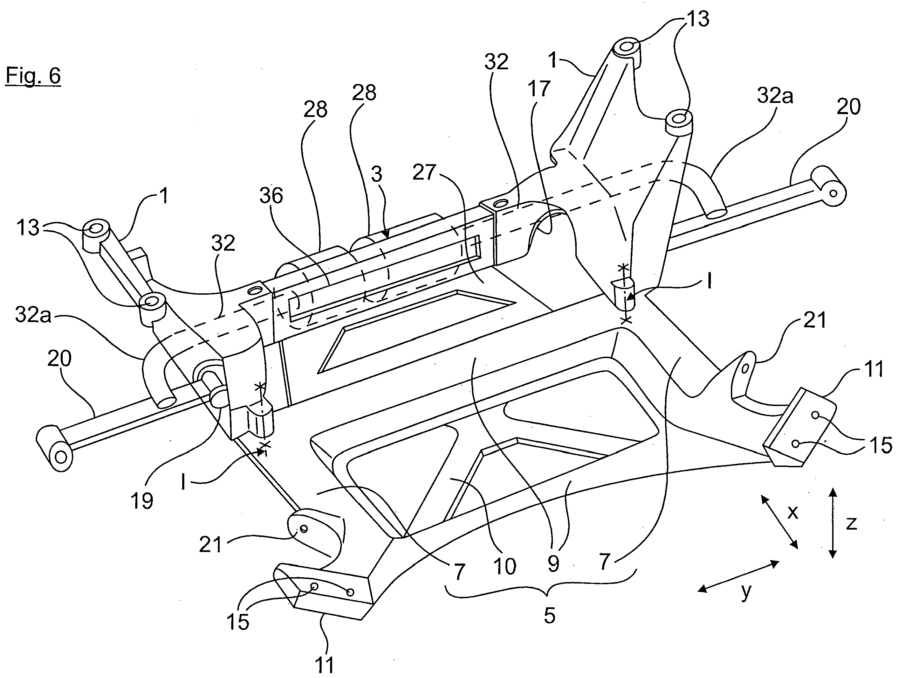

In dem vorangegangenen Ausführungsbeispiel sind den beiden Drehfederstäben 32 ein gemeinsamer Aktuator 28 zugeordnet. Alternativ dazu ist in der Fig. 6 für jeden Drehfederstab 32 ein eigener Aktuator 28 vorgesehen. Die beiden Aktuatoren 28 sind in der Fig. 6 funktionell voneinander entkoppelt sowie koaxial angeordnet. Anstelle dessen können die beiden Aktuatoren 28 auch in leichter Winkelstellung zueinander positioniert sein. Darüber hinaus können die beiden Aktuatoren 28 auch in einem gemeinsamen Gehäuse angeordnet sein.

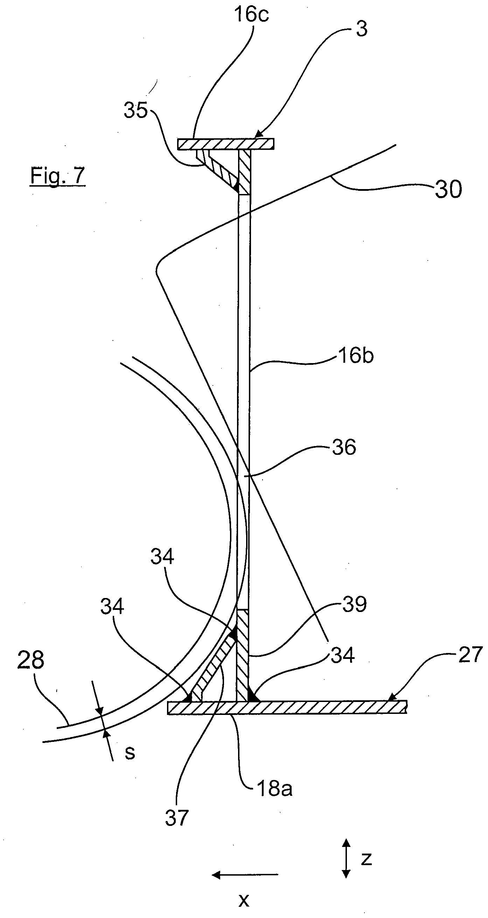

In der Fig. 7 ist in einer besonders bauraumgünstigen Ausführung eine Ansicht entsprechend der Fig. 5 gezeigt. Im Unterschied zur Fig. 5 ragt jedoch nicht nur der Aktuator 28 in die Durchbrüche 35, 36 ein, sondern zusätzlich auch das Lenkgetriebe 30. Das Lenkgetriebe 30 ist hierzu mit einem Höhenversatz leicht verschachtelt oberhalb des Aktuators 28 angeordnet. Außerdem ist in der Fig. 7 nicht nur das untere Rahmenwandteil 37 schräg nach hinten umgelegt, sondern zusätzlich auch das obere Rahmenwandteil. Dadurch wird die Steifigkeit des Hilfsrahmen-Querträgers 3 weiter erhöht. Zudem wird der vom vorderen Durchbruch 35 bereitgestellte Bauraum vergrößert.

Alternativ dazu kann auch alleine das Lenkgetriebe 30 in die Durchbrüche 35, 36 einragen, während der Aktuator 28 in der Fahrtrichtung x vor dem Hilfsrahmen-Querträger 3 angeordnet ist, ohne in seine Durchbrüche 35, 36 einzuragen.

## Patentansprüche

1. Hilfsrahmen für ein Kraftfahrzeug, mit zwei, in einer Fahrzeugquerrichtung (y) voneinander beabstandeten vorderen Knotenelementen (1) zur Anbindung an einem Fahrzeugaufbau, die über einen vorderen Hilfsrahmen-Querträger (3) miteinander verbunden sind, und mit zumindest einem benachbart zum Hilfsrahmen-Querträger (3), in einer Fahrzeugquerrichtung (y) verlaufenden Funktionsteil (28), das ein Drehaktuator ist, mit dem auf die Fahrzeug-Radaufhängung wirkende Drehfederstäbe (32) mit einer Torsion beaufschlagbar sind, **dadurch gekennzeichnet, dass** der Hilfsrahmen-Querträger (3) einen Durchbruch (35, 36) aufweist, der einen zusätzlichen Bauraum bereitstellt, in dem das Funktionsteil (28) zumindest teilweise einragt, und zwar berührungsfrei unter Bildung eines Freigangs (s) zwischen dem Funktionsteil (28) und dem Durchbruch (35, 36) des Hilfsrahmen-Querträgers (3), und dass die Drehfederstäbe (32) des als Drehaktuator ausgebildeten Funktionsteils (28) in der Fahrzeuglängsrichtung (x) beabstandet sowie außerhalb des vom Hilfsrahmen-Querträger (3) bereitgestellten Durchbruchs (35, 36) angeordnet sind.

2. Hilfsrahmen nach Anspruch 1, **dadurch gekennzeichnet, dass** der Hilfsrahmen-Querträger (3) ein Hochkantprofil mit zumindest einer Querträgerwand (16a, 16b) ist, und dass in der Querträgerwand (16a, 16b) der Durchbruch (35, 36) angeordnet ist.

3. Hilfsrahmen nach Anspruch 1 oder 2, **dadurch gekennzeichnet, dass** der Hilfsrahmen-Querträger (3) den Durchbruch (35, 36) geschlossen rahmenförmig begrenzt, und zwar mit in der Hochrichtung (z) oberen und unteren Wandrahmenteilen (37, 39) sowie in der Fahrzeugquerrichtung (y) seitliche Wandrahmenteile, und dass insbesondere sämtliche Wandrahmenteile materialeinheitlich und/oder einstückig in der Querträgerwand ausgebildet sind.

4. Hilfsrahmen nach Anspruch 2 oder 3, **dadurch gekennzeichnet, dass** der Hilfsrahmen-Querträger (3) einen Hohlraum begrenzt, und zwar mit einer in der Fahrzeuglängsrichtung (x) vorderen Querträgerwand (16a) und einer hinteren Querträgerwand (16b).

5. Hilfsrahmen nach Anspruch 4, **dadurch gekennzeichnet, dass** in den beiden Querträgerwänden (16a, 16b) ein Durchbruch (35, 36) ausgebildet ist.

6. Hilfsrahmen nach Anspruch 5, **dadurch gekennzeichnet, dass** der Außenumfang des Funktionsteils (28) im Wesentlichen kreisförmig ist und dass die Höhe der Durchbrüche (35, 36) zur Konturanpassung an das einragende Funktionsteil (28) entsprechend unterschiedlich bemessen sind.

7. Hilfsrahmen nach einem der Ansprüche 3 bis 6, **dadurch gekennzeichnet, dass** zumindest ein Rahmenwandteil (37) des Hilfsrahmen-Querträgers (3) mit einem Neigungswinkel schräg umgelegt ist, insbesondere ein oberes Rahmenwandteil und/oder ein unteres Rahmenwandteil (37) der in der Fahrzeuglängsrichtung (x) näher an dem Funktionsteil (28) angeordneten Querträgerwand (16a).

8. Hilfsrahmen nach Anspruch 7, **dadurch gekennzeichnet, dass** das schräg umgelegte Rahmenwandteil (37) mit der benachbarten Querträgerwand (16b) ein geschlossenen Hohlprofil bilden und insbesondere mit dieser verschweißt ist.

9. Hilfsrahmen nach einem der vorhergehenden Ansprüche, **dadurch gekennzeichnet, dass** das Hohlprofil des Hilfsrahmen-Querträgers (16) in der Hochrichtung (z) von einem Obergurt (16c) und einem Untergurt (18a) begrenzt ist, zwischen denen die Querträgerwände (16a, 16b) angeordnet sind.

10. Hilfsrahmen nach einem der vorhergehenden Ansprüche, **dadurch gekennzeichnet, dass** in der Fahrzeuglängsrichtung (x) betrachtet vor und hinter dem Hilfsrahmen-Querträger (16) jeweils ein quer verlaufendes Funktionsteil (28, 30), insbesondere ein Lenkgetriebe (30), vorgesehen ist, und dass der Hilfsrahmen-Querträger (20) in einem Freiraum zwischen den beiden Funktionsteilen (28, 30) angeordnet ist.

## Claims

1. Subframe for a motor vehicle, having two front node elements (1), separated from one another in a vehicle transverse direction (y), for connection to a vehicle body, which are connected to one another by means of a front subframe transverse beam (3), and having at least one functional part (28) extending in a vehicle transverse direction (y) next to the subframe transverse beam (3), which is a rotary actuator by which a torsion can be applied to torsion spring rods (32) acting on the vehicle wheel suspension, **characterised in that** the subframe transverse beam (3) has an opening (35, 36) that provides an additional installation space in which the functional part (28) at least partially projects, specifically contactlessly with the formation of a free passage (s) between the functional part (28) and the opening (35, 36) of the subframe transverse beam (3), and **in that** the rotary spring rods (32) of the functional part (28) configured as a rotary actuator are spaced apart in the vehicle longitudinal direction (x) and are arranged outside the opening (35, 36) provided by the subframe transverse beam (3).

2. Subframe according to claim 1, **characterised in that** the subframe transverse beam (3) is a high-edged profile section having at least one transverse beam wall (16a, 16b), and **in that** the opening (35, 36) is arranged in the transverse beam wall (16a, 16b).

3. Subframe according to claim 1 or 2, **characterised in that** the subframe transverse beam (3) continuously bounds the opening (35, 36) in the shape of a frame, specifically with upper and lower wall frame parts (37, 39) in the height direction (z) and lateral frame parts in the vehicle transverse direction (y), and **in that** in particular all the wall frame parts are formed with material uniformity and/or in one piece in the transverse beam wall (16a, 16b).

4. Subframe according to claim 2 or 3, **characterised in that** the subframe transverse beam (3) bounds a cavity, specifically with a front transverse beam wall (16a) in the vehicle longitudinal direction (x) and a rear front transverse beam wall (16b).

5. Subframe according to claim 4, **characterised in that** an opening (35, 36) is formed in both transverse beam walls (16a, 16b).

6. Subframe according to claim 5, **characterised in that** the outer circumference of the functional part (28) is essentially circular, and **in that** the heights of the openings (35, 36) are correspondingly dimensioned differently for contour matching to the functional part (28) projecting in.

7. Subframe according to one of claims 3 to 6, **characterised in that** at least one frame wall part (37) of the subframe transverse beam (3) is placed obliquely with an inclination angle, in particular an upper frame wall part and/or a lower frame wall part (37) of the transverse beam wall (16a) arranged closer to the functional part (28) in the vehicle longitudinal direction (x).

8. Subframe according to claim 7, **characterised in that** the obliquely placed frame wall part (37) forms a closed hollow profiled section with the neighbouring transverse beam wall (16b), and in particular is welded thereto.

9. Subframe according to one of the preceding claims, **characterised in that** the hollow profiled section of the subframe transverse beam (3) is bounded in the height direction (z) by an upper belt (16c) and a lower belt (18a), between which the transverse beam walls (16a, 16b) are arranged.

10. Subframe according to one of the preceding claims, **characterised in that** a transversely extending functional part (28, 30), in particular a steering gear (30), is respectively provided in front of and behind the subframe transverse beam (3) as seen in the vehicle longitudinal direction (x), and **in that** the subframe transverse beam (3) is arranged in a free space between the two functional parts (28, 30).

## Revendications

1. Faux-châssis pour un véhicule automobile, comprenant deux éléments de jonction (1) avant espacés l'un de l'autre dans un sens transversal de véhicule (y), destinés à être reliés à une carrosserie de véhicule, lesquels sont raccordés l'un à l'autre par l'intermédiaire d'une poutre transversale de faux-châssis (3) avant, et comprenant au moins une pièce fonctionnelle (28) s'étendant de manière adjacente à la poutre transversale de faux-châssis (3) dans un sens transversal de véhicule (y), laquelle est un actionneur rotatif, avec lequel des barres élastiques de torsion (32) agissant sur la suspension de roue de véhicule peuvent être soumises à l'action d'une torsion, **caractérisé en ce que** la poutre transversale de faux-châssis (3) présente un ajour (35, 36), qui fournit un espace de montage supplémentaire, dans lequel dépasse au moins en partie la pièce fonctionnelle (28), et ce sans contact en formant un passage dégagé (s) entre la pièce fonctionnelle (28) et l'ajour (35, 36) de la poutre transversale de faux-châssis (3), et que les barres élastiques de torsion (32) de la pièce fonctionnelle (28) réalisée sous la forme d'un actionneur rotatif sont disposées dans le sens de la longueur de véhicule (x) de manière espacée ainsi qu'à l'extérieur de l'ajour (35, 36) fourni par la poutre transversale de faux-châssis (3).

2. Faux-châssis selon la revendication 1, **caractérisé en ce que** la poutre transversale de faux-châssis (3) est un profil à chant pourvu d'au moins une paroi de poutre transversale (16a, 16b), et que l'ajour (35, 36) est disposé dans la paroi de poutre transversale (16a, 16b).

3. Faux-châssis selon la revendication 1 ou 2, **caractérisé en ce que** la poutre transversale de faux-châssis (3) délimite en forme de châssis de manière fermée l'ajour (35, 36), et ce avec des pièces de châssis à parois (37, 39) supérieure et inférieure dans le sens vertical (z) ainsi qu'avec des pièces de châssis à parois latérales dans le sens transversal de véhicule (y), et qu'en particulier toutes les pièces de châssis à paroi sont réalisées de manière uniforme en termes de matériau et/ou d'un seul tenant dans la paroi de poutre transversale (16a, 16b).

4. Faux-châssis selon la revendication 2 ou 3, **caractérisé en ce que** la poutre transversale de faux-châssis (3) délimite un espace creux, et ce avec une paroi de poutre transversale avant (16a) dans le sens de la longueur de véhicule (x) et une paroi de poutre transversale arrière (16b).

5. Faux-châssis selon la revendication 4, **caractérisé en ce qu'**un ajour (35, 36) est réalisé dans les deux parois de poutre transversale (16a, 16b).

6. Faux-châssis selon la revendication 5, **caractérisé en ce que** la périphérie extérieure de la pièce fonctionnelle (28) est sensiblement de forme circulaire, et que les hauteurs des ajours (35, 36) présentent afin d'adapter le contour à la pièce fonctionnelle (28) qui dépasse des dimensions de manière correspondante différentes.

7. Faux-châssis selon l'une des revendications 3 à 6, **caractérisé en ce qu'**au moins une pièce de paroi de châssis (37) de la poutre transversale de faux-châssis (3) est déplacée de manière oblique selon un angle d'inclinaison, en particulier une pièce de paroi de châssis supérieure et/ou une pièce de paroi de châssis inférieure (37) de la paroi de poutre transversale (16a) disposée davantage à proximité de la pièce fonctionnelle (28) dans le sens de la longueur de véhicule (x).

8. Faux-châssis selon la revendication 7, **caractérisé en ce que** la pièce de paroi de châssis (37) déplacée de manière oblique forme, avec la paroi de poutre transversale (16b) adjacente, un profil creux fermé et en particulier est soudée à cette dernière.

9. Faux-châssis selon l'une des revendications précédentes, **caractérisé en ce que** le profil creux de la poutre transversale de faux-châssis (3) est délimité dans le sens vertical (z) par une membrure supérieure (16c) et une membrure inférieure (18a), entre lesquelles les parois de poutre transversale (16a, 16b) sont disposées.

10. Faux-châssis selon l'une des revendications précédentes, **caractérisé en ce que** respectivement une pièce fonctionnelle (28, 30) s'étendant de manière transversale, en particulier un mécanisme de direction (30), est prévue, vue dans le sens de la longueur de véhicule (x), devant et derrière la poutre transversale de faux-châssis (3), et que la poutre transversale de faux-châssis (3) est disposée dans un espace dégagé entre les deux pièces fonctionnelles (28, 30).
